# FASCICULE DE BREVET EUROPEEN

(11) **EP 2 715 438 B1**
(45) Date de publication et mention de la délivrance du brevet: **18.02.2015**
(21) Numéro de dépôt: 12729667.1
(22) Date de dépôt: 16.05.2012
(51) Int. Cl.: G02C 13/00

(54) **PROCÈDE ET DISPOSITIF DE DÉTERMINATION D'AU MOINS UN PARAMÈTRE D'AJUSTEMENT PERSONNALISE D'UNE LENTILLE PORTEE PAR UNE MONTURE DE LUNETTES EN REGARD DE L' IL D'UN PORTEUR**
VERFAHREN UND VORRICHTUNG ZUR BESTIMMUNG VON MINDESTENS EINEM PERSONALISIERTEN EINSTELLUNGSPARAMETER EINER LINSE IN EINEM BRILLENGESTELL VOR DEM AUGE EINES TRÄGERS
METHOD AND DEVICE FOR DETERMINING AT LEAST ONE CUSTOMIZED ADJUSTMENT PARAMETER OF A LENS CARRIED BY A SPECTACLES FRAME FACING THE EYE OF A WEARER

(30) Priorité: 23.05.2011 FR 1101584
(43) Date de publication de la demande: 09.04.2014
(73) Titulaire: Essilor International (Compagnie Générale d'Optique), 94220 Charenton-le-Pont (FR)
(72) Inventeur: HADDADI, Ahmed, F-94220 Charenton-le-Pont (FR)
(74) Mandataire: Chauvin, Vincent
(86) Numéro de dépôt international: PCT/FR2012/000200
(87) Numéro de publication internationale: WO 2012/160273

(56) Documents cités:
- EP-A1- 2 233 066
- US-A1- 2003 090 625
- US-B1- 7 909 460

## Description

### DOMAINE TECHNIQUE AUQUEL SE RAPPORTE L'INVENTION

La présente invention concerne de manière générale le domaine de la personnalisation des verres de lunettes correcteurs.

Elle concerne plus particulièrement un procédé et un dispositif de détermination d'au moins un paramètre d'ajustement personnalisé d'une lentille portée par une monture de lunettes en regard de l'oeil d'un porteur.

Elle concerne en particulier un procédé et un dispositif simple et économique aptes à mesurer les paramètres dits de « monturisation » c'est-à-dire les paramètres destinés à permettre le montage et le centrage des lentilles correctrices sur une monture choisie par un porteur de lunettes de manière à obtenir la correction optique requise.

### ARRIERE-PLAN TECHNOLOGIQUE

On connaît différents procédés et dispositifs pour ajuster une lentille sur une monture de lunettes en fonction de la morphologie du porteur de lunettes et de la forme et des dimensions de la monture de lunettes.

Dans le cadre du montage de lentilles ophtalmiques de correction visuelle dans une monture de lunettes, on cherche à prendre mieux en compte des paramètres géométrico-posturaux individuels, attachés au porteur et à la monture qu'il a choisie.

Les paramètres géométrico-posturaux recherchés sont liés à la géométrie de la tête du porteur et de la monture de lunettes choisie, ainsi qu'à la posture du porteur. Ils comprennent notamment la configuration spatiale de chaque lentille par rapport à la tête du porteur, dans les conditions du porté de la monture équipée de ses lentilles. La monture est une monture de présentation ou la monture finale avec verres de prescription pour contrôle. Cette configuration spatiale est notamment déterminée par l'angle pantoscopique de chaque lentille au porté (angle que forme le plan général de la lentille par rapport à la verticale) et la hauteur des yeux du porteur par rapport au bord inférieur de la lentille.

Pour déterminer cette configuration spatiale, l'opticien place une paire de lunettes de présentation sur le nez du porteur. Les lunettes de présentation comportent la monture choisie par le porteur et des lentilles non correctrices montées dans les cercles de la monture.

La mesure de la hauteur des yeux du porteur par rapport au bord inférieur de la monture peut être effectuée manuellement : l'opticien observe le porteur de face et réalise une mesure à l'estimé, au moyen d'un réglet, de la distance entre la pupille d'un oeil et le bord inférieur de la lentille de présentation. L'opticien peut aussi évaluer approximativement l'angle pantoscopique entre le plan de maintien PM de la lentille et un plan vertical par des moyens propres à chaque opérateur. D'autre part, lors de la prise de mesure des paramètres géométrico-posturaux, un opérateur approche et applique un outil de mesure sur la monture du porteur, ce qui peut induire le porteur à modifier involontairement sa posture naturelle. Enfin, cette mesure n'est pas très ergonomique pour l'opérateur.

On a proposé d'automatiser la détermination de ces paramètres géométrico-posturaux en la réalisant à partir d'une ou plusieurs captures d'images du porteur équipé de la monture de lunettes choisie. Ces images sont traitées pour déterminer les paramètres recherchés.

Cependant, ces méthodes de détermination des paramètres géométrico-posturaux du porteur souffrent d'une grande imprécision. En effet, pour effectuer une mesure précise, il faut que la tête du porteur soit dans sa posture naturelle de vision au loin au moment de la mesure, c'est-à-dire lorsque le porteur, libre de toute contrainte, regarde au loin en port de tête naturel.

Les dispositifs de détermination des paramètres géométrico-postériaux du porteur sont décrits par exemple dans les documents US-A-7 909 460, EP-A-2 233 066 ou US-A 2003/0090625.

Il existe un besoin d'un ajustement personnalisé de lentilles sur une monture de lunettes qui prenne en compte plus de paramètres : non seulement la morphologie du visage du porteur et la forme précise de la monture choisie, mais aussi des paramètres liés à l'utilisation des lunettes par le porteur, tels que sa posture naturelle de vision au loin avec lunettes.

### OBJET DE L'INVENTION

A cet effet, la présente invention propose un dispositif de détermination d'au moins un paramètre d'ajustement personnalisé d'une lentille portée par une monture de lunettes en regard de l'oeil d'un porteur, tel que défini dans la revendication 1. Ladite monture de lunettes comprenant au moins une branche et des moyens pour maintenir au moins une lentille suivant un plan de maintien. Le paramètre d'ajustement comprend un premier angle pantoscopique formé entre le plan de maintien et la verticale dans la posture de vision du porteur.

Le dispositif de mesure comprend un support plan présentant un marquage en forme de segment de droite et un rapporteur plan monté à rotation autour d'un axe de rotation coupant la droite du segment de droite formant le marquage, de manière à ce que ledit rapporteur soit mobile en rotation dans un plan parallèle au support plan, ledit rapporteur comprenant au moins un repère visuel radial passant par l'axe de rotation et adapté à être aligné avec le plan de maintien de la monture de lunettes lorsque la monture de lunettes est posée sur ledit support plan, une branche étant alignée avec le marquage du support plan et l'extrémité de la branche proche du plan de maintien de la monture étant voisine de l'axe de rotation, de manière à ce que l'angle formé entre le marquage du support plan et le repère radial corresponde à un second angle pantoscopique formé entre, d'une part, la projection de la branche de ladite monture dans le plan sagittal du porteur et, d'autre part, la trace dans ce même plan de la face avant de ladite monture, et ledit support plan comprenant une pluralité d'échelles graduées, chaque échelle graduée étant associée à un paramètre postural prédéterminé, la position du repère radial par rapport à une échelle graduée permettant une lecture directe dudit premier angle pantoscopique.

D'autres caractéristiques non limitatives et avantageuses du dispositif conforme à l'invention sont les suivantes :
- ledit support plan comprend une première échelle graduée associée à un premier paramètre postural prédéterminé dans lequel le premier angle pantoscopique est égal au second angle pantoscopique, et au moins une seconde échelle graduée associée à un second paramètre postural prédéterminé, les graduations de ladite seconde échelle étant décalées d'un angle de correction prédéterminé par rapport à ladite première échelle ;
- ledit support plan est formé dans une feuille de plastique transparent et les échelles de mesure sont imprimées dans une combinaison de quatre couleurs, chaque couleur étant associée à un paramètre postural prédéterminé du porteur de la monture de lunettes dans une posture de vision ;
- ledit support plan comprend en outre des moyens de mesure des écarts pupillaires, des moyens de mesure de la hauteur pupillaire, des moyens de mesure d'un angle de gauchissement/cambrure de la monture et/ou des moyens de mesure de la distance entre l'oeil du porteur et la face arrière de la lentille.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de profil de la tête d'un porteur équipé des lunettes de présentation ;
- la figure 2 est une vue de face d'un dispositif de mesure selon un mode de réalisation de l'invention ;
- la figure 3 est une vue de face du dispositif de mesure de la figure 2 sur lequel est posée une monture de lunettes.

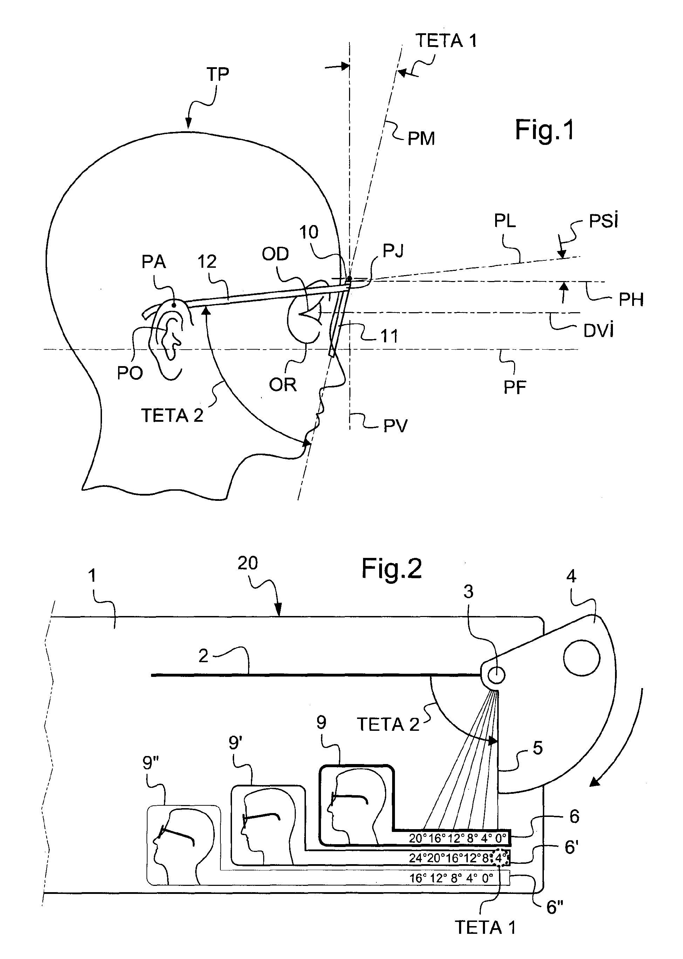

Sur la figure 1, on a représenté une vue de profil de la tête d'un porteur TP équipé des lunettes de présentation. Le porteur est équipé d'une monture 10 qu'il a préalablement choisie et sur laquelle seront montées des lentilles exerçant une fonction optique de correction visuelle conforme à une prescription. Cette monture 10 comporte classiquement deux cercles 11, reliés par un pontet nasal, et deux branches 12.

Comme représenté sur la figure 1, le plan de Francfort PF est défini comme le plan passant par les points orbitaires inférieurs OR et le porion PO du porteur, le porion étant le point du crâne le plus élevé du conduit auditif, qui correspond au tragion TR de l'oreille, c'est-à-dire le point le plus élevé du tragus de l'oreille.

On définit aussi un plan médian ou sagittal PSAG de la tête du porteur TP, parallèle au plan de la figure 1. Le plan sagittal PSAG, ou plan médian vertical de la tête du porteur est le plan orthogonal au plan de Francfort PF, passant par le milieu des deux centres de rotation CROD, CROG des yeux OD (pour oeil droit) et OG (pour oeil gauche).

Chaque cercle 11 de la monture s'étend dans un plan de maintien PM qui, vu de profil, forme avec un plan vertical PV un angle d'inclinaison verticale TETA1 autour d'une direction horizontale perpendiculaire au plan sagittal PSAG. Dans le présent document, cet angle TETA1 est appelé premier angle pantoscopique.

D'autre part, on définit l'axe longitudinal d'une branche 12 comme étant une droite passant d'une part par le point d'appui PA d'une branche de lunette sur l'oreille du porteur et d'autre part par le point de jonction PJ de la branche 12 à la monture de lunettes 10. On entend par plan longitudinal PL un plan perpendiculaire au plan sagittal PSAG et comprenant un axe longitudinal d'une branche 12 d'une monture 10. Le plan longitudinal PL forme avec un plan horizontal PH un angle PSI.

On définit dans le présent document un second angle pantoscopique TETA2 formé entre le plan de maintien PM et le plan longitudinal PL défini ci-dessus qui comprend l'axe longitudinal d'une branche 12 de la monture 10.

Une constatation faisant partie de la présente invention est que l'une des difficultés de la mesure de l'angle pantoscopique d'une lentille par rapport à la verticale lorsque le porteur de lunettes regarde au loin résulte pour partie d'une confusion entre le premier angle pantoscopique TETA1, qui est l'angle recherché, et le second angle pantoscopique TETA2. D'autre part, la posture naturelle de vision au loin d'un porteur équipé de lentilles correctrices ne correspond pas toujours à la posture dans laquelle les mesures géométrico-morphologiques d'ajustement sont effectuées. Cette différence de posture entre la posture de mesure des paramètres géométrico-anatomiques et la posture naturelle de vision au loin peut induire un décalage notamment entre le centre optique de la lentille sur la monture et la position en hauteur de la ligne de vision DVI du porteur dans sa posture naturelle de vision au loin. Or le centrage des verres est essentiel pour assurer la correction prescrite. Un décalage entre le centre du regard et le centre de la lentille en position naturelle de vision au loin est susceptible de générer un inconfort voire une mauvaise correction de la vision pour le porteur.

L'opticien détermine généralement les paramètres géométrico-posturaux du porteur dans une certaine posture anatomique du porteur. Pour effectuer la mesure des paramètres géométrico-posturaux, on recommande généralement au porteur de placer sa tête dans la posture où son plan de Francfort est horizontal.

Ainsi, sur la figure 1, le porteur est dans une configuration de posture naturelle assise ou debout, c'est-à-dire que le plan de Francfort PF relatif à la tête du porteur est sensiblement horizontal. Dans cette position, l'axe de regard ou droite de visée DV du porteur est initialement l'axe de regard primaire DVI, horizontal, et correspond au cas où le porteur regarde l'horizon droit devant lui à l'infini.

La figure 1 représente uniquement la tête du porteur. La posture de vision du porteur dépend d'une part d'un premier angle d'inclinaison de la tête du porteur dans le plan sagittal par rapport à son corps, ce premier angle d'inclinaison étant lié à une rotation de la tête du porteur par rapport à un axe horizontal perpendiculaire au plan sagittal PSAG de la tête du porteur. La posture du porteur dépend d'autre part d'un deuxième angle d'inclinaison du corps du porteur dans un plan vertical vers l'avant ou vers l'arrière, ce deuxième angle d'inclinaison du corps correspond à une rotation du corps du porteur autour d'un axe horizontal. La posture de vision du porteur est une fonction de la somme de l'angle d'inclinaison de la tête du porteur et de l'angle d'inclinaison du corps. Par conséquent, le premier angle pantoscopique TETA1 dépend aussi généralement de la somme de l'angle d'inclinaison de la tête du porteur et de l'angle d'inclinaison du corps, puisque l'inclinaison du plan moyen PM des cercles de la monture suit celle de la tête.

Toutefois, la posture de mesure, par exemple face à un opérateur, ne correspond pas toujours à la posture du porteur dans les conditions usuelles du porté des lunettes. En effet, la posture où le plan de Franfort du porteur est horizontal correspond à la position orthostatique dans laquelle le porteur réalise un minimum d'efforts pour une grande partie de la population mais pas pour tous les porteurs de lunettes. Or, on constate que certains porteurs ont une posture naturelle de vision au loin dans laquelle leur tête est inclinée vers l'avant d'un angle moyen d'environ 4 degrés. D'autres porteurs ont une posture naturelle de vision au loin dans laquelle leur tête est inclinée vers l'arrière d'un angle moyen d'environ -4 degrés.

Les différences entre la posture de tête du porteur lors de la prise de mesure et lors de l'utilisation ultérieure des lunettes par le porteur modifient le premier angle pantoscopique TETA1 et sont susceptibles d'induire une erreur sur la mesure de hauteur pupillaire et un décentrage des lentilles par rapport à la droite de visée DV du porteur.

### Dispositif

La figure 2 représente schématiquement une vue de face d'un dispositif de mesure 20 selon un mode de réalisation particulier de l'invention. Le dispositif 20 de la figure 2 comprend un support plan 1 par exemple en matériau plastique transparent sur lequel apparaît un marquage 2 en forme de segment de droite. Le support plan 1 comprend une pluralité d'échelles graduées 6, 6', 6" chaque échelle graduée étant associée respectivement à un paramètre postural prédéterminé 9, 9', 9". Dans l'exemple représenté sur la figure 2, un premier paramètre postural 9 correspond à une posture de vision dans laquelle la tête du porteur est horizontale; un deuxième paramètre postural 9' correspond à une posture de vision dans laquelle la tête du porteur est plongeante ou inclinée vers l'avant, et un troisième paramètre postural 9" correspond à une posture de vision dans laquelle la tête du porteur est relevée ou inclinée vers l'arrière. Le dispositif 20 de la figure 2 comporte aussi un rapporteur plan 4 monté à rotation autour d'un axe de rotation 3 coupant la droite du segment de droite formant le marquage 2, de manière à ce que ledit rapporteur 4 soit mobile en rotation dans un plan parallèle au support plan 1. Le rapporteur 4 comporte un repère visuel radial 5 passant par l'axe de rotation 3, par exemple représenté sur la tranche du rapporteur 4 sur la figure 2. Selon l'orientation angulaire du rapporteur 4, le repère visuel radial 5 indique une direction qui correspond à une graduation différente respectivement sur la première échelle graduée 6, sur la deuxième échelle graduée 6' et sur la troisième échelle graduée 6".

Selon un mode de réalisation préféré, les échelles graduées 6, 6' et 6" sont imprimées en quadrichromie de manière à permettre un repérage rapide.

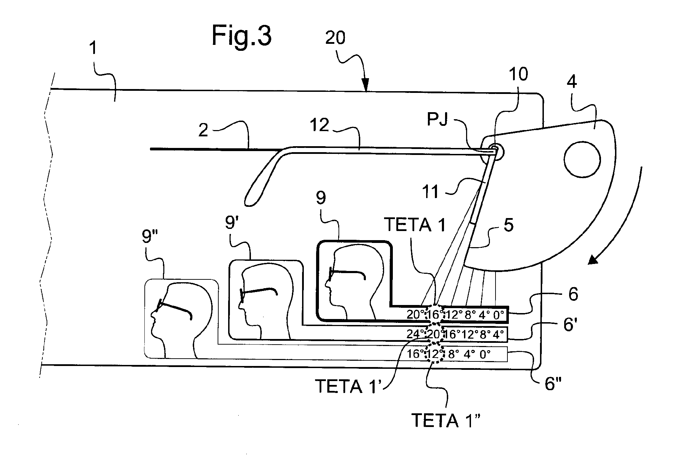

La figure 3 représente schématiquement une vue de face du dispositif de mesure de la figure 2 sur lequel une monture de lunettes est posée sur sa branche 12, la monture étant ici vue de profil. Plus précisément, la monture de lunettes est posée sur le support plan 1, l'axe longitudinal d'une branche 12 étant aligné avec le marquage 2 du support plan 1 et l'extrémité de la branche proche du plan de maintien PM étant voisine de l'axe de rotation 3 du rapporteur 4. On observe sur la figure 3 une branche 12 de lunettes et la trace de la face avant de la monture dans le plan du support 1.

### Procédé

Nous allons maintenant décrire un procédé de détermination du premier angle pantoscopique TETA1 au moyen du dispositif représenté sur la figure 3. L'opérateur pose la monture sur le support 1 et aligne la monture sur le support 1 comme indiqué ci-dessus en lien avec la figure 3. L'opérateur maintient la monture dans cette position, tout en orientant le rapporteur 4 de manière à aligner le repère radial 5 avec la trace de la face avant de la monture dans le plan du support 1, autrement dit en alignant le repère visuel 5 avec la projection des cercles 11 dans le plan du support 1. L'angle formé entre le marquage 2 du support plan 1 et le repère visuel 5 correspond alors au second angle pantoscopique TETA2 formé entre, d'une part, la projection de la branche 12 de la monture dans le plan sagittal du porteur et, d'autre part, la face avant de la monture.

Pour déterminer le premier angle pantoscopique TETA1 correspondant à la posture de vision du porteur, l'opérateur compare et identifie la posture naturelle de vision au loin du porteur à l'une parmi les postures prédéterminées : tête horizontale 9, tête plongeante inclinée vers l'avant 9' ou tête relevée inclinée vers l'arrière 9". De cette comparaison, l'opérateur déduit l'échelle de graduations 6', 6 ou 6" à utiliser. L'intersection du repère radial et de l'échelle graduée associée à la posture naturelle de vision au loin du porteur indique directement le premier angle pantoscopique TETA1. Dans l'exemple de la figure 3, si le porteur a une posture de vision de type 9, on lit l'angle TETA1 sur l'échelle 6. Dans le cas où le porteur a une posture de vision de type 9' on lit l'angle TETA1' sur l'échelle 6'. Respectivement, dans le cas où le porteur a une posture de vision de type 9' on lit l'angle TETA1' sur l'échelle 6".

La posture naturelle de vision au loin du porteur peut par exemple être préalablement identifiée par une estimation de l'angle d'inclinaison PSI d'une branche 12 de lunettes par rapport à un plan horizontal PH. On peut ainsi déterminer la posture naturelle de vision du porteur parmi trois postures de vision : tête horizontale, tête plongeante ou tête relevée.

Avantageusement, le dispositif 20 comprend non seulement un outil de mesure du premier angle pantoscopique TETA1, mais regroupe différents outils de mesure de plusieurs paramètres géométrico-posturaux individuels.

Selon un mode de réalisation particulier, le support plan 1 du dispositif 20 comprend en outre différentes règles destinées à mesurer différents paramètres géométrico-posturaux. Par exemple, le support peut comporter une règle pour mesurer la distance pupillaire et/ou une autre règle pour mesurer la hauteur pupillaire ou encore la distance de vertex entre l'oeil du porteur et la face arrière d'une lentille.

De manière complémentaire, le dispositif de mesure tel que représenté sur la figure 3 peut comprendre en outre une abaque destinée à mesurer l'angle de galbe ou la cambrure d'une monture de lunettes, lorsque la monture est posée sur cette abaque en appui sur les cercles 11.

Le support plan 1 comprend avantageusement un réglet plastique transparent gravé noir et blanc selon les zones pour la mesure de l'angle pantoscopique. Le rapporteur 4 est de préférence un demi-disque rotatif afin d'aligner celui-ci avec la face avant de la monture lorsque la branche de ladite monture a été préalablement posé sur le repère imprimé. De même le rapporteur 4 est avantageusement en matériau plastique transparent. Les échelles graduées de mesure 6, 6', 6" du premier angle pantoscopique TETA1.

Dans un autre mode de réalisation de l'invention, le paramètre postural du porteur correspond à différentes postures du porteur telles que les positions assis, debout, ou encore à une posture de vision de près (à la maison devant la télévision, un écran d'ordinateur ou de téléphonie ou de vision en voiture). Dans un autre mode de réalisation de l'invention, le paramètre postural du porteur correspond à différentes tailles ou âges (enfant, adulte, personne âgée ...).

L'invention propose un dispositif simple et économique, qui permet de mesurer les paramètres dits de « monturisation » et en particulier le premier angle pantoscopique TETA1 qui est fortement influencé par le comportement du porteur de lunettes, notamment son port de tête lors de regard au loin.

L'invention permet d'améliorer la mesure de l'angle pantoscopique du porteur en introduisant, d'une part un moyen de réalisation d'une fonction de transfert entre d'une part le premier angle pantoscopique TETA1 lié à la lentille et à la posture de vision du porteur et d'autre part le deuxième angle pantoscopique TETA2 lié à la monture. De plus, le dispositif de l'invention propose une abaque de correspondance entre le premier et le deuxième angle pantoscopique.

Dans un exemple de réalisation particulier, deux échelles différentes de graduation du premier angle pantoscopique TETEA1 sont décalées par rapport à une échelle de graduation TETA1 standard respectivement d'un angle de + ou - 4° en fonction du port de tête du porteur. Le dispositif comprend alors une abaque de lecture du premier angle pantoscopique TETA1, décalée respectivement de + ou - 4° en fonction du port de tête du porteur.

D'autre part le dispositif de mesure basé sur une fonction de transfert entre un angle mesuré et un angle recherché permet d'augmenter l'ergonomie d'usage. En effet, lors de la mesure il n'y a pas de contact entre l'opérateur et le porteur, donc pas de modification de la posture naturelle du porteur. Le dispositif et le procédé limitent les effets de la parallaxe entre la face avant de la monture et les indexes imprimés permettant la mesure de cet angle.

Le procédé et le dispositif de l'invention permettent de déterminer l'angle pantoscopique absolu TETA1 qui tient compte à la fois de la monture de lunettes choisie par le porteur et d'au moins un paramètre postural du porteur, comme par exemple sa posture naturelle de vision au loin.

## Revendications

1. Dispositif de détermination d'au moins un paramètre d'ajustement personnalisé d'une lentille (11) portée par une monture de lunettes en regard de l'oeil d'un porteur, ladite monture de lunettes comprenant au moins une branche (12) et des moyens pour maintenir au moins une lentille (11) suivant un plan de maintien,
- ledit paramètre d'ajustement comprend un premier angle pantoscopique (TETA1) formé entre le plan de maintien et la verticale dans la posture de vision du porteur,
ledit dispositif de mesure comprend :
- un support plan (1) présentant un marquage (2) en forme de segment de droite ;
- un rapporteur plan (4) monté à rotation autour d'un axe de rotation (3) coupant la droite du segment de droite formant le marquage (2), de manière à ce que ledit rapporteur (4) soit mobile en rotation dans un plan parallèle au support plan (1), ledit rapporteur (4) comprenant au moins un repère visuel radial (5) passant par l'axe de rotation (3) et adapté à être aligné avec le plan de maintien de la monture de lunettes lorsque la monture de lunettes est posée sur ledit support plan, une branche (12) étant alignée avec le marquage (2) du support plan (1) et l'extrémité de la branche proche du plan de maintien de la monture étant voisine de l'axe de rotation (3), de manière à ce que l'angle formé entre le marquage (2) du support plan (1) et le repère radial (5) corresponde à un second angle pantoscopique (TETA2) formé entre, d'une part, la projection de la branche (12) de ladite monture dans le plan sagittal du porteur et, d'autre part, la trace dans ce même plan de la face avant de ladite monture, **caractérisé en ce que** :
- ledit support plan (1) comprend une pluralité d'échelles graduées (6, 6', 6"), chaque échelle graduée (6, 6', 6") étant associée à un paramètre postural prédéterminé correspondant à une posture naturelle de vision de loin du porteur parmi les postures prédéterminées : tête horizontale, tête plongeante inclinée vers l'avant ou tête relevée inclinée vers l'arrière, la position du repère radial par rapport à une échelle graduée permettant une lecture directe dudit premier angle pantoscopique (TETA1), dans lequel ledit support plan (1) comprend une première échelle graduée (6) associée à un premier paramètre postural prédéterminé (9) correspondant à une posture de vision du porteur dans laquelle la tête du porteur est horizontale et dans lequel le premier angle pantoscopique (TETA1) est égal au second angle pantoscopique (TETA2), et au moins une seconde échelle graduée (6', 6") associée à un second paramètre postural prédéterminé (9', 9") correspondant à une posture de vision du porteur dans laquelle la tête du porteur est inclinée vers l'avant ou vers l'arrière, les graduations de ladite seconde échelle (6', 6") étant décalées d'un angle de correction prédéterminé par rapport à ladite première échelle (6).

2. Dispositif de mesure selon la revendication 1 dans lequel ledit support plan (1) est formé dans une feuille de plastique transparent et dans lequel les échelles de mesure graduées (6, 6', 6") sont imprimées dans une combinaison de quatre couleurs, chaque couleur étant associée à un paramètre postural prédéterminé (9, 9', 9") du porteur de la monture de lunettes dans une posture de vision.

## Patentansprüche

1. Vorrichtung zum Bestimmen wenigstens eines personalisierten Einstellparameters einer Linse (11), die von einem Brillengestell gegenüber dem Auge eines Trägers getragen wird, wobei das Brillengestell wenigstens einen Bügel (12) und Mittel zum Halten wenigstens einer Linse (11) in einer Halteebene umfasst,
- wobei der Einstellparameter einen ersten pantoskopischen Winkel (TETA1), der zwischen der Halteebene und der Vertikalen in der Sichthaltung des Trägers gebildet wird, enthält,
wobei die Messvorrichtung Folgendes umfasst:
- einen ebenen Träger (1), der eine Markierung (2) in Form eines Geradensegments aufweist;
- einen ebenen Gradbogen (4), der drehbar um eine Drehachse (3) montiert ist, die die Gerade des Geradensegments, das die Markierung (2) bildet, schneidet, derart, dass dieser Gradbogen (4) in einer Ebene parallel zu dem ebenen Träger (1) rotatorisch beweglich ist, wobei der Gradbogen (4) wenigstens ein radiales sichtbares Bezugssystem (5) umfasst, das durch die Drehachse (3) verläuft und dafür ausgelegt ist, auf die Halteebene des Brillengestells ausgerichtet zu werden, wenn das Brillengestell in dem ebenen Träger angeordnet ist, wobei ein Bügel (12) auf die Markierung (2) des ebenen Trägers (1) ausgerichtet ist und das Ende des Bügels in der Nähe der Halteebene des Gestells sich in der Nähe der Drehachse (3) befindet, derart, dass der zwischen der Markierung (2) des ebenen Trägers (1) und dem radialen Bezugssystem (5) gebildete Winkel einem zweiten pantoskopischen Winkel (TETA2) entspricht, der zwischen einerseits der projektion des Bügels (12) des Gestells auf die Sagittalebene des Trägers und andererseits der Spur derselben Ebene der Vorderseite des Gestells gebildet wird, **dadurch gekennzeichnet, dass**
- der ebene Träger (1) mehrere Maßskalen (6, 6', 6") umfasst, wobei jede Maßskala (6, 6', 6") einem vorgegebenen Haltungsparameter zugeordnet ist, der einer natürlichen Weitsichthaltung des Trägers unter den folgenden vorgegebenen Haltungen entspricht: horizontaler Kopf, nach vorn geneigter gesenkter Kopf oder nach hinten geneigter erhobener Kopf, wobei die Position des radialen Bezugssystems in Bezug auf eine Maßskala ein direktes Ablesen des ersten pantoskopischen Winkels (TETA1) ermöglicht, wobei der ebene Träger (1) eine erste Maßskala (6) aufweist, die einem ersten vorgegebenen Haltungsparameter (9) zugeordnet ist, der einer Sichthaltung des Trägers entspricht, in der der Kopf des Trägers horizontal ist und in der der erste pantoskopische Winkel (TETA1) gleich dem zweiten pantoskopischen Winkel (TETA2) ist, und wenigstens eine zweite Maßskala (6', 6") aufweist, die einem zweiten vorgegebenen Haltungsparameter (9', 9") zugeordnet ist, der einer Sichthaltung des Trägers entspricht, in der der Kopf des Trägers nach vorn oder nach hinten geneigt ist, wobei die Einteilungen der zweiten Skala (6', 6") um einen vorgegebenen Korrekturwinkel in Bezug auf die erste Skala (6) versetzt sind.

2. Messvorrichtung nach Anspruch 1, wobei der ebene Träger (1) in einer lichtdurchlässigen Kunststofffolie gebildet ist und wobei die Maßskalen (6, 6', 6") in einer Kombination aus vier Farben gedruckt sind, wobei jede Farbe einem vorgegebenen Haltungsparameter (9, 9', 9") des Brillengestells in einer Sichthaltung zugeordnet ist.

## Claims

1. A device for evaluating at least one individualized fitting parameter for a lens (11) mounted in a spectacle frame facing the eye of a wearer, said spectacle frame comprising at least one temple (12) and means for holding at least one lens (11) in a holding plane,
- said fitting parameter comprises a first pantoscopic angle (TETA1) formed between the holding plane and the vertical in the vision posture of the wearer;
said measuring device comprises:
- a flat supporting member (1) containing a mark (2) taking the form of a line segment;
- a flat protractor (4) rotatably mounted about a rotation axis (3) cutting the straight line of the line segment forming the mark (2), so that said protractor (4) is able to rotate in a plane parallel to the flat supporting member (1), said protractor (4) comprising at least one visual radial marker (5) passing through the rotation axis (3) and designed to be aligned with the holding plane of the spectacle frame when the spectacle frame is placed on said flat supporting member, a temple (12) being aligned with the mark (2) of the flat supporting member (1), and the end of the temple proximal the holding plane of the frame being placed next to the rotation axis (3) so that the angle formed between the mark (2) of the flat supporting member (1) and the radial marker (5) corresponds to a second pantoscopic angle (TETA2) formed between, on the one hand, the projection of the temple (12) of said frame onto the sagittal plane of the wearer, and on the other hand, the trace, on the same plane, of the front side of said frame; **characterized in that**:
- said flat supporting member (1) comprises a plurality of graduated scales, each graduated scale being associated with a preset postural parameter corresponding to a natural far vision posture of the wearer among the preset postures: head horizontal, head lowered and inclined forward, or head raised and inclined backward, the position of the radial marker relative to a graduated scale allowing said first pantoscopic angle (TETA1) to be read directly, in which said flat supporting member (1) comprises a first graduated scale (6) associated with a first preset postural parameter (9) corresponding to a vision posture of the wearer wherein the head of the wearer is horizontal and for which the first pantoscopic angle (TETA1) is equal to the second pantoscopic angle (TETA2), and at least one second graduated scale (6', 6") associated with a second preset postural parameter (9', 9") corresponding to a vision posture of the wearer wherein the head of the wearer is inclined forward or backward, the graduations of said second scale (6', 6") being offset by a preset correction angle relative to said first scale (6).

2. The measuring device as claimed in claim 1, in which said flat supporting member (1) is formed from a transparent plastic sheet and in which the graduated measurement scales (6, 6', 6") are printed in a combination of four colors, each color being associated with a preset postural parameter (9, 9', 9") of the wearer of the spectacle frame in a vision posture.
